(19) Europäisches Patentamt
European Patent Office
Office européen des brevets

(11) **EP 3 617 153 A1**

(12) **EUROPEAN PATENT APPLICATION**

(43) Date of publication:
**04.03.2020  Bulletin 2020/10**

(51) Int Cl.:
***C01G 51/00*** *(2006.01)*

(21) Application number: **19193019.7**

(22) Date of filing: **22.08.2019**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br>Designated Validation States:<br>**KH MA MD TN**<br><br>(30) Priority: **22.08.2018   KR 20180098249**<br><br>(71) Applicant: **Samsung SDI Co., Ltd.<br>Gyeonggi-do 17084 (KR)**<br><br>(72) Inventors:<br>• **Hong, Soonkie<br>  17084 Yongin-si, Gyeonggi-do (KR)** | • **Kim, Young-Ki<br>  17084 Yongin-si, Gyeonggi-do (KR)**<br>• **Lee, Soonrewl<br>  17084 Yongin-si, Gyeonggi-do (KR)**<br>• **Lee, Young-Hun<br>  17084 Yongin-si, Gyeonggi-do (KR)**<br>• **Jang, Jiyeon<br>  17084 Yongin-si, Gyeonggi-do (KR)**<br>• **Choi, Ickkyu<br>  17084 Yongin-si, Gyeonggi-do (KR)**<br>• **Hong, Mingzi<br>  17084 Yongin-si, Gyeonggi-do (KR)**<br><br>(74) Representative: **Gulde & Partner<br>Patent- und Rechtsanwaltskanzlei mbB<br>Wallstraße 58/59<br>10179 Berlin (DE)** |

(54) **POSITIVE ACTIVE MATERIAL, METHOD OF MANUFACTURING THE SAME, AND POSITIVE ELECTRODE AND RECHARGEABLE LITHIUM BATTERY INCLUDING THE SAME**

(57)     Disclosed are a positive active material including a lithium cobalt oxide including secondary particles having an average particle diameter of 15 $\mu$m to 25 $\mu$m, wherein the secondary particle includes a plurality of primary particles having an average particle diameter of 2 $\mu$m to 10 $\mu$m, and the positive active material has pellet density of greater than or equal to 3.80 g/cm$^3$. Further, a method of manufacturing a positive active material, and a positive electrode and a rechargeable lithium battery including the same are disclosed.

**Description**

**BACKGROUND OF THE INVENTION**

(a) Field of the Invention

A positive active material, a method of manufacturing the same, and a positive electrode and a rechargeable lithium battery including the same are disclosed.

(b) Description of the Related Art

A battery transforms chemical energy generated from an electrochemical redox reaction of a chemical material in the battery into electrical energy. Such a battery is divided into a primary battery, which should be disposed after the energy of the battery is all consumed, and a rechargeable battery, which may be recharged many times. The rechargeable battery may be charged/discharged many times based on the reversible transformation between chemical energy and electrical energy.

Recent developments in high-tech electronics have allowed electronic devices to become small and light in weight, which leads to an increase in portable electronic devices. As a power source for such portable electronic devices, the demands for batteries with high energy density are increasing and researches on lithium rechargeable battery are briskly under progress.

The rechargeable lithium battery is manufactured by an injecting electrolyte into a battery cell, which includes a positive electrode including a positive active material capable of intercalating/deintercalating lithium and a negative electrode including a negative active material capable of intercalating/deintercalating lithium.

The positive active material includes a lithium-containing compound reversibly intercalating and deintercalating lithium, for example, a lithium-containing composite oxide such as a lithium cobalt oxide, a lithium manganese oxide, a lithium nickel oxide, and the like.

As used of the rechargeable lithium battery is increased, demand on a rechargeable lithium battery having a smaller size and a lighter weight but improved efficiency and capacity is also increased. Accordingly, in order to provide the rechargeable lithium battery having improved efficiency and capacity, necessity of a positive active material having improved density is also increased.

**SUMMARY OF THE INVENTION**

An embodiment provides a positive active material having high density and thermal stability and a method of manufacturing the same.

Another embodiment provides a positive electrode including the positive active material.

Another embodiment provides a rechargeable lithium battery with improved efficiency and cycle-life retention.

According to one aspect of the disclosure, a positive active material for a rechargeable lithium battery is provided. The positive active material comprises lithium cobalt oxide. The lithium cobalt oxide includes or consists of secondary particles having an average particle diameter of 15 $\mu$m to 25 $\mu$m, wherein the secondary particles include a plurality of primary particles having an average particle diameter of 2 $\mu$m to 10 $\mu$m. The positive active material has a pellet density of greater than or equal to 3.80 g/cm$^3$.

According to another aspect of the disclosure, a method of manufacturing a positive active material for a rechargeable lithium battery is provided, wherein the positive active material comprises lithium cobalt oxide. The method includes the steps of heat-treating a cobalt-containing compound at a temperature of greater than or equal to 900 °C to form a cobalt oxide including $Co_3O_4$ and CoO, and reacting the cobalt oxide with a lithium compound. Said method may form the lithium cobalt oxide according to the above embodiment.

According to another embodiment, a positive electrode includes a current collector and a positive active material layer, wherein the positive active material layer includes the aforementioned positive active material, respectively the positive active material layer obtained by the above preparation method.

According to another embodiment, a rechargeable lithium battery includes the aforementioned positive electrode, a negative electrode, and an electrolyte.

The positive active material has high pellet density and thus may provide high electrode density and accordingly, contribute to improving electrochemical properties such as efficiency and cycle-life retention of the rechargeable lithium battery.

**BRIEF DESCRIPTION OF THE DRAWINGS**

FIG. 1 is a schematic view of a cross section of a positive active material according to an embodiment.

FIG. 2 is a schematic view showing a rechargeable lithium battery according to another embodiment.

FIG. 3 is a graph showing X-ray diffraction results of each cobalt oxide produced during heat-treatments at about 800 °C, about 850 °C, and about 900 °C.

FIG. 4 is a graph showing differential scanning calorimetry (DSC) evaluation results of positive active materials according to Example 1 and Comparative Example 1.

**DETAILED DESCRIPTION OF THE EMBODIMENTS**

Hereinafter, the exemplary embodiments of the present invention will be described in detail, referring to the accompanying drawings. However, in the description of the present disclosure, descriptions for already known functions or components will be omitted for clarifying the gist of the present disclosure.

According to an embodiment, a positive active material includes a lithium cobalt oxide. The lithium cobalt oxide includes or consists of secondary particles having an average particle diameter of 15 $\mu$m to 25 $\mu$m, wherein the secondary particles include a plurality of primary particles having an average particle diameter of 2 $\mu$m to 10 $\mu$m, and the positive active material has pellet density of greater than or equal to 3.80 g/cm$^3$. The lithium cobalt oxide including the secondary particles consisting of the agglomerated primary particles has high density, compared with lithium cobalt oxide prepared in conventional manner and including no such agglomeration of primary particles. The positive active material exhibits excellent performance in terms of initial efficiency, rate capability, cycle-life retention, and thermal stability.

Herein, the average particle diameter is a particle diameter (D50) at 50 volume% in a cumulative size-distribution curve of particle diameters measured by putting a plurality of particles in a particle size analyzer.

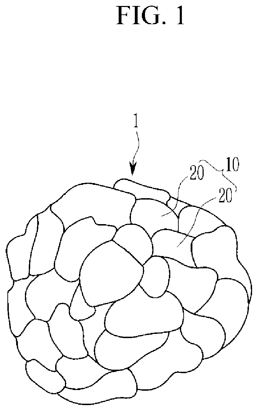

The positive active material is illustrated with reference to FIG. 1. FIG. 1 is a schematic view of a cross section of a positive active material according to an embodiment. Referring to FIG. 1, a positive active material includes secondary particles 1 having an average particle diameter of 15 $\mu$m to 25 $\mu$m in which a plurality of primary particles 10 having an average particle diameter of 2 $\mu$m to 10 $\mu$m of primary particle 20 is agglomerated.

The positive active material may have pellet density of greater than or equal to 3.80 g/cm$^3$, for example, greater than or equal to 3.82 g/cm$^3$. The positive active material may have a pellet density of less than or equal to 3.90 g/cm$^3$, for example, less than or equal to 3.85 g/cm$^3$. When the positive active material has a pellet density within these ranges, electrode density may be improved. Without being bound by the correctness of any theory or explanation, it is thought that the high, improved pellet density of the positive active material is a result of the secondary particle structure and size of the positive active material according to embodiments of the present disclosure, as afforded by the preparation methods described herein, which were not available in the related art.

Since the primary particles 10 are closely stuck together, the secondary particle 1 may have an internal porosity of less than or equal to 10 %. In addition, the secondary particles 1 may have an internal pore size of less than or equal to 5 nm, for example, less than or equal to 4 nm or less than or equal to 3 nm. Herein, "internal" denotes a core of the secondary particle obtained by excluding a shell of 2 $\mu$m thickness measured from the outmost surface of the secondary particle. As used herein, the term "internal porosity" may refer to the volume of internal pores relative to the total volume of the secondary particle 10, which volume does not include the lithium cobalt oxide or other solid material.

The primary particle 20 and the secondary particle 1 may have an average particle diameter ratio of greater than or equal to 1:3, greater than or equal to 1:4, or greater than or equal to 1:5 and less than or equal to 1:12, for example, less than or equal to 1:11, less than or equal to 1:10, less than or equal to 1:9, less than or equal to 1:8, or less than or equal to 1:7. Within the range, initial efficiency, rate capability, and cycle-life retention of the positive active material may be improved.

The cross section of the secondary particle cut to include the longest diameter may include greater than or equal to eight cross sections of the primary particles. In other words, greater than or equal to eight primary particles may be present on the longest cross section of one secondary particle. As the primary particles are more included, initial efficiency, rate capability, and a cycle-life retention may be more improved. In an embodiment, the cross sections of the primary particles may be less than or equal to 20, for example, less than or equal to 18, less than or equal to 15, or less than or equal to 12. The number of the cross sections of the particles may be counted by a scanning electron microscope (SEM).

A c-axis lattice constant of the lithium cobalt oxide may satisfy the following range.

$$14.060 \text{ Å} \leq c \leq 14.069 \text{ Å}$$

When the c-axis lattice constant of the lithium cobalt oxide satisfies the range, efficiency and cycle-life retention of a rechargeable lithium battery manufactured by including the lithium cobalt oxide may be further improved. Since the lithium cobalt oxide corresponds to a layered compound, as a c-axis length is increased, activity of lithium ions becomes more facilitated, and accordingly, an excellent effect in terms of charge/discharge efficiency and cycle-life retention may be obtained.

The lithium cobalt oxide may further include oxide including at least one metal selected from Mn, Zn, Ti, and Co. For example, the at least one metal-containing oxide may be coated on the lithium cobalt oxide. This oxide may be included in an amount of greater than or equal to 0.5 parts by weight, for example, greater than or equal to 0.6 parts by weight, greater than or equal to 0.7 parts by weight, greater than or equal to 0.8 parts by weight, or greater than or equal to 1 part by weight and less than or equal to 5 parts by weight, for example, less than or equal to 4 parts by weight, or less than or equal to 3 parts by weight based on 100 parts by weight of the lithium cobalt oxide. Herein, the initial efficiency and the rate capability may be further improved.

Another embodiment provides a positive active material including a first lithium cobalt oxide and a second lithium cobalt oxide having an average particle diameter of 2 $\mu$m to 10 $\mu$m (small particle lithium cobalt oxide). The first lithium cobalt oxide is the aforementioned lithium cobalt oxide (large particle first lithium cobalt oxide). In this way, when the large particle first lithium cobalt oxide and the small particle second lithium cobalt oxide are mixed, pellet density of the positive active material and electrode density of a positive electrode including the same may be further increased.

The first lithium cobalt oxide and the second lithium cobalt oxide may be included in a weight ratio of greater than or equal to 6:4, for example, greater than or equal to 7:3 and less than or equal to 9:1, for example, less than or equal to 8:2. Within the range, the pellet density of the positive active material and the electrode density of the positive electrode including the same may be further improved.

At least one of the first lithium cobalt oxide and the second lithium cobalt oxide may further include oxide including at least one metal selected from Mn, Zn, Ti, and Co. For example, the at least one metal-containing oxide may be coated on at least one surface of the first lithium cobalt oxide and the second lithium cobalt oxide. The oxide may be coated in an amount of greater than or equal to 0.5 parts by weight, for example, greater than or equal to 0.6 parts by weight, greater than or equal to 0.7 parts by weight, greater than or equal to 0.8 parts by weight, or greater than or equal to 1 part by weight and less than or equal to 5 parts by weight, for example, less than or equal to about 4 parts by weight, or less than or equal to 3 parts by weight based on 100 parts by weight of the lithium cobalt oxide. Herein, the initial efficiency and the rate capability may be further improved.

The lithium cobalt oxide may be produced through a reaction of cobalt oxide including CoO and a lithium compound. This cobalt oxide including CoO shows an X-ray diffraction (XRD) peak within a 2 theta range of about 40 ° to about 45 ° (degree) in the analysis that corresponds to the CoO. As used herein, the term "cobalt oxide" may refer to one or more types or kinds of compounds including (e.g., consisting of) oxygen atoms, and cobalt atoms having any suitable oxidation state. Non-limiting examples of cobalt oxide include cobalt(II) oxide (CoO), cobalt (II,II) oxide ($Co_3O_4$), cobalt (III) oxide ($Co_2O_3$), and combinations thereof.

The lithium cobalt oxide may be prepared by heat-treating a cobalt-containing compound at greater than or equal to 900 °C to form cobalt oxide including $Co_3O_4$ and CoO and then, reacting the cobalt oxide with the lithium compound.

The cobalt-containing compound may be $Co(OH)_2$, $CoCO_3$, or a mixture thereof. When the cobalt-containing compound is heat-treated at greater than or equal to 900 °C, the cobalt oxide including $Co_3O_4$ and CoO is produced. When the cobalt oxide including the two types of oxides is reacted with the lithium compound, a plurality of primary particles is gathered due to CoO having high reactivity and thus formed into secondary particle-shaped lithium cobalt oxide.

The aforementioned lithium compound may include for example, lithium phosphate ($Li_3PO_4$), lithium nitrate ($LiNO_3$), lithium acetate ($LiCH_3COOH$), lithium carbonate ($Li_2CO_3$), lithium hydroxide (LiOH), lithium dihydrogen phosphate ($LiH_2PO_4$), or a combination thereof.

The lithium compound may be included in a mole ratio of lithium relative to cobalt in a range of 0.8 to 1.0. When the mole ratio of lithium relative to cobalt is within the range, efficiency and cycle-life retention of a rechargeable lithium battery including the positive active material may be improved. In this way, when the cobalt-containing compound is heat-treated at greater than or equal to 900 °C to prepare cobalt oxide including CoO, which is reacted with the lithium compound, a positive active material having a denser structure may be prepared than when the cobalt-containing compound is heat-treated at a temperature of about 850 °C to prepare cobalt oxide, which is reacted with the lithium compound.

Hereinafter, a positive electrode including the positive active material is described.

The positive electrode includes a current collector and a positive active material layer disposed on at least one surface of the current collector.

The current collector may be an aluminum foil.

The positive active material layer includes the aforementioned positive active material, a binder, and a conductive material.

The binder improves binding properties of the positive active material particles to each other and to a current collector. Examples of the binder include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, and nylon.

The conductive material provides an electrode with conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material such as metal powder or metal fiber including copper, nickel, aluminum, silver, and the like; a conductive polymer such as polyphenylene derivative, or a mixture thereof.

The positive electrode may be manufactured by mixing the positive active material, the binder, and the conductive material in a solvent to prepare positive active material slurry and coating the positive active material slurry on a current collector.

The solvent includes N-methylpyrrolidone and the like.

Herein, the positive electrode may have mixture density of greater than or equal to about 4.00 g/cm$^3$ or greater than or equal to about 4.03 g/cm$^3$ and less than or equal to about 4.10 g/cm$^3$ or less than or equal to about 4.05 g/cm$^3$. When the mixture density of the positive electrode is within the range, a positive electrode having excellent discharge capacity may be obtained, while problems such as lack of electrolyte solution impregnation, deterioration of high rate capability, destruction of an active material particle or breakage of a current collector during the process, and the like may be prevented in advance.

The positive electrode is not limited to the arranged shapes but may have other shapes. The positive electrode may additionally include a positive active material conventionally known in the related art but having at least one different technical feature in terms of a composition, a particle diameter, and the like from those of the aforementioned positive active material in addition to the aforementioned positive active material.

Hereafter, a rechargeable lithium battery including the aforementioned positive electrode is described.

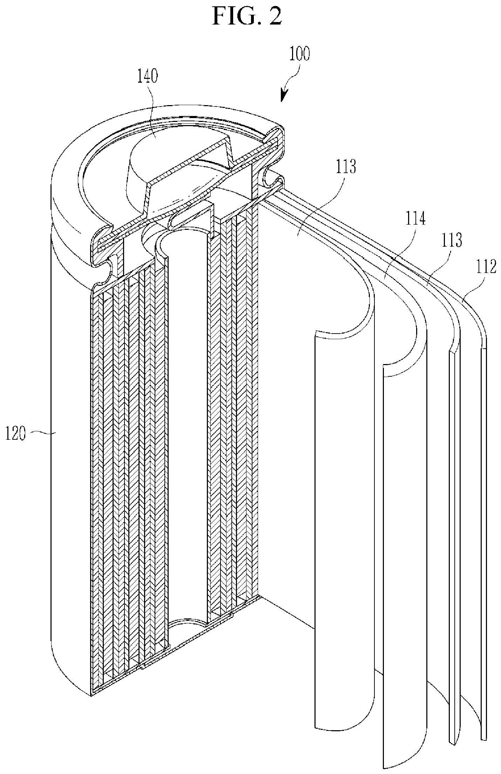

FIG. 2 is a schematic view showing a rechargeable lithium battery according to another embodiment. Referring to FIG. 2, a rechargeable lithium battery 100 includes a battery cell including a positive electrode 114, a negative electrode 112 facing the positive electrode 114, a separator 113 interposed between the positive electrode 114 and the negative electrode 112, an electrolyte solution (not shown) impregnating the positive electrode 114, negative electrode 112, and separator 113, a battery case 120, and a sealing member 140 sealing the battery case 120.

The positive electrode 114 may be the aforementioned positive electrode.

The negative electrode 112 includes a current collector and a negative active material layer formed on at least one surface of the current collector.

The current collector may include a copper foil, a nickel foil, a stainless steel foil, a titanium foil, a nickel foam, a copper foam, a polymer substrate coated with a conductive metal, or a combination thereof.

The negative active material layer includes a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon material. The carbon material may be any generally-used carbon-based negative active material in a rechargeable lithium battery. Examples thereof may be crystalline carbon, amorphous carbon, or a mixture thereof. The crystalline carbon may be non-shaped, or sheet, flake, spherical, or fiber shaped natural graphite or artificial graphite. The amorphous carbon may be a soft carbon (low temperature fired carbon), a hard carbon, a mesophase pitch carbonization product, fired coke, and the like.

Among them, when particularly graphite is used, there is no voltage change at a negative electrode, and accordingly, a 3 V-grade high-capacity battery may be effectively manufactured by using it with the lithium cobalt oxide-based positive active material.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, SiOx (0 < x < 2), a Si-Q alloy (wherein Q is an element selected from an alkali metal, an alkaline-earth metal, a Group 13 element, a Group 14 element, a transition metal, a rare earth element, and a combination thereof, and not Si), Sn, SnO$_2$, Sn-R alloy (wherein R is an element selected from an alkali metal, an alkaline-earth metal, a Group 13 element, a Group 14 element, a transition metal, a rare earth element, and a combination thereof, and not Sn), and the like. At least one of these materials may be mixed with SiO$_2$. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof.

The binder improves binding properties of negative active material particles with one another and with a current collector. The binder includes a non-water-soluble binder, a water-soluble binder, or a combination thereof.

The non-water-soluble binder may be selected from polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, or a combination thereof.

The water-soluble binder may be a styrene-butadiene rubber, an acrylated styrene-butadiene rubber, polyvinyl alcohol, sodium polyacrylate, a copolymer of propylene and a C2 to C8 olefin, a copolymer of (meth)acrylic acid and (meth)acrylic acid alkyl ester, or a combination thereof.

When the water-soluble binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metals may be Na, K, or Li. Such a thickener may be included in an amount of about 0.1 to about 3 parts by weight based on 100 parts by weight of the negative active material.

The conductive material may be used as a conductive material unless it causes a chemical change. Examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminum silver, and the like; a conductive polymer such as a polyphenylene derivative; or a mixture thereof.

The negative electrode may be manufactured by mixing a negative active material, a binder and optionally a conductive material in a solvent to prepare a negative active material slurry, and coating the negative active material slurry on a current collector followed by drying and compressing. The solvent may be N-methylpyrrolidone but it is not limited thereto. Since the method of manufacturing the negative electrode is well known, it is not described in detail in the present specification.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent. The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like and the ester-based solvent may include methyl acetate, ethyl acetate, n-propyl acetate, dimethylacetate, methylpropionate, ethylpropionate, $\gamma$-butyrolactone, decanolide, valerolactone, mevalonolactone, caprolactone, and the like. The ether-based solvent may include dibutyl ether, tetraglyme, diglyme, dimethoxyethane, 2-methyltetrahydrofuran, tetrahydrofuran, and the like and the ketone-based solvent may include cyclohexanone, and the like. The alcohol-based solvent include ethanol, isopropyl alcohol, and the like and the aprotic solvent may include nitriles such as R-CN (wherein, R is a C2 to C20 linear, branched, or cyclic hydrocarbon group and may include a double bond, aromatic ring, or ether bond) and the like, amides such as dimethylformamide, dioxolanes such as 1,3-dioxolane, sulfolanes, and the like.

The non-aqueous organic solvent may be used alone or in a mixture. When the organic solvent is used in a mixture, a mixing ratio may be controlled in accordance with a desirable battery performance.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one supporting salt selected from $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $LiC_4F_9SO_3$, $LiClO_4$, $LiAlO_2$, $LiAlCl_4$, $LiN(C_xF_{2x+1}SO_2)(C_yF_{2y+1}SO_2)$ wherein, x and y are natural numbers, for example an integer of 1 to 20), LiCl, Lil, and $LiB(C_2O_4)_2$ (lithium bis(oxalato) borate, LiBOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

The separator 113 separates a positive electrode 114 and a negative electrode 112 and provides a transporting passage for lithium ions and may be any generally-used separator in a lithium ion battery. In other words, it may have low resistance to ion transport and excellent impregnation for an electrolyte. For example, separator may be selected from a glass fiber, polyester, Teflon, polyethylene, polypropylene, polytetrafluoroethylene (PTFE), or a combination thereof. It may have a form of a non-woven fabric or a woven fabric. For example, in a lithium ion battery, a polyolefin-based polymer separator such as polyethylene and polypropylene is mainly used. In order to ensure the heat resistance or mechanical strength, a coated separator including a ceramic component or a polymer material may be used. Optionally, it may have a mono-layered or multi-layered structure.

Rechargeable lithium batteries may be classified as lithium ion batteries, lithium ion polymer batteries, and lithium polymer batteries according to the presence of a separator and the kind of electrolyte used therein. The rechargeable lithium batteries may have a variety of shapes and sizes, and include cylindrical, prismatic, coin, or pouch-type batteries, and may be thin film batteries or may be rather bulky in size. Structures and manufacturing methods for lithium ion batteries pertaining to this disclosure are well known in the art.

Hereinafter, the above aspects of the present disclosure are illustrated in more detail with reference to examples. However, these examples are exemplary, and the present disclosure is not limited thereto.

Example 1: Preparation of Positive Active Material

Cobalt oxide ($Co_3O_4$) including CoO was prepared by heat-treating $CoCO_3$ under a condition of increasing a temperature up to 900 °C at 5 °C/min, maintaining it at 900 °C for 5 hours, and then, decreasing it down to 25 °C at 5 °C/min.
The cobalt oxide was mixed with lithium carbonate ($Li_2CO_3$) to prepare a mixture having a mole ratio of Li:Co = 1:1.
The mixture was heat-treated under a condition of increasing a temperature up to 1050 °C at 5 °C/min, maintaining it at 1050 °C for 5 hours, and decreasing it down to 25 °C at 5 °C/min to prepare a $LiCoO_2$ positive active material including secondary particles including a plurality of primary particles. The obtained $LiCoO_2$ secondary particles had an average particle diameter of 20 $\mu$m, and the primary particles had an average particle diameter of 3 $\mu$m.

Example 2: Preparation of Positive Active Material

$LiCoO_2$ (small particle lithium cobalt oxide) having an average particle diameter of 5 $\mu$m was prepared by heat-treating lithium carbonate and cobalt oxide having an average particle diameter of 4 $\mu$m in a mole ratio of 0.97:1 at 1050 °C.
$LiCoO_2$ (large particle lithium cobalt oxide) according to Example 1 and the obtained $LiCoO_2$ (small particle lithium cobalt oxide) were mixed in a weight ratio of 8:2 to prepare a positive active material.

Example 3: Preparation of Positive Active Material

$LiCoO_2$ (small particle lithium cobalt oxide) having an average particle diameter of 5 $\mu$m was prepared by heat-treating lithium carbonate and cobalt oxide having an average particle diameter of 4 $\mu$m in a mole ratio of 0.97:1 at 1050 °C.
$LiCoO_2$ (large particle lithium cobalt oxide) according to Example 1 and the obtained $LiCoO_2$ (small particle lithium cobalt oxide) were mixed in a weight ratio of 8:2 and then, heat-treated with $TiO_2$ at 950 °C to prepare a positive active material. Herein, $TiO_2$ (titanium dioxide anatase, an average particle diameter of 0.33 $\mu$m] was used in an amount of 1 part by weight based on 100 parts by weight of the lithium cobalt oxides.

Comparative Example 1: Preparation of Positive Active Material

Lithium hydroxide (LiOH) and Co(OH)$_2$ were mixed in a mole ratio of 1:1 mole ratio to prepare a mixture.
The mixture was heat-treated under a condition of increasing a temperature up to 400 °C at 5 °C/min, maintaining it at 400 °C for 5 hours, and decreasing it down to 25 °C at 5 °C/min. Subsequently, the mixture was remixed and uniformly dispersed and then, secondarily heat-treated at 750 °C for 12 hours at the same increasing and decreasing temperature rates as above to prepare a $LiCoO_2$ positive active material including a plurality of primary particles. The obtained $LiCoO_2$ primary particles had an average particle diameter of 1 $\mu$m, and the secondary particles had an average particle diameter of 10 $\mu$m.

Example 4: Manufacture of Rechargeable Lithium Battery Cell

96 wt% of the positive active material according to Example 1, 2 wt% of ketjen black, and 2 wt% of polyvinylidene fluoride were mixed in N-methyl pyrrolidone solvent to prepare positive active material slurry. The positive active material slurry was coated on an Al foil followed by drying and compressing the same to manufacture a positive electrode. The positive electrode, a lithium metal counter electrode, and an electrolyte were used to manufacture a half-cell. The electrolyte was prepared by dissolving 1.0M LiPF$_6$ in a mixed solvent of ethylene carbonate and dimethyl carbonate (a volume ratio of 1:1).

Examples 5 and 6: Manufacture of Rechargeable Lithium Battery Cells

Each half-cell according to Examples 5 and 6 was manufactured by respectively using the positive active materials according to Examples 2 and 3 instead of the positive active material according to Example 1.

Comparative Example 2: Manufacture of Rechargeable Lithium Battery Cell

A half-cell according to Comparative Example 2 was manufactured by using the positive active material according to Comparative Example 1 instead of the positive active material according to Example 1.

Evaluation Example 1: X-ray Diffraction Analysis of Cobalt Oxide Depending on Heat-treatment Temperature

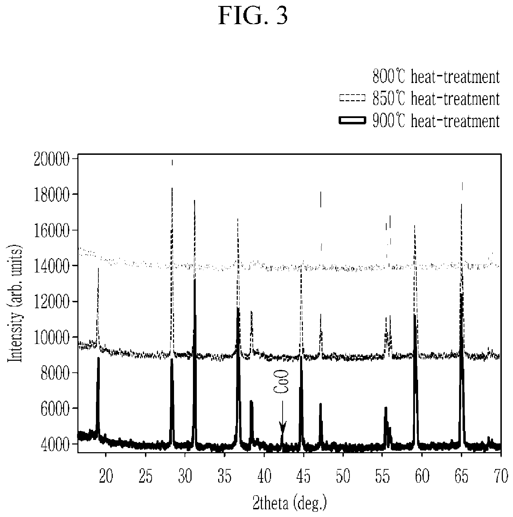

An X-ray diffraction of cobalt oxide obtained by heat-treating $CoCO_3$ at 800 °C, 850 °C, and 900 °C was analyzed. Cu K$\alpha$-ray was used as a light source, and the analysis was performed in a range of 10 °≤ 2$\theta$ ≤ 80 ° at scan rate of 1 °/min. The results are shown in FIG. 3. Referring to FIG. 3, only the cobalt oxide heat-treated at greater than or equal to 900 °C exhibited an X-ray diffraction peak of cobalt oxide having a CoO structure.

Evaluation Example 2: X-ray Diffraction Pattern Analysis of Positive Active Material

X-ray diffraction patterns of the positive active materials according to Example 1 and Comparative Example 1 were measured by using a CuK$\alpha$-ray, and the results are shown in Table 1.

(Table 1)

|  | a (Å) | c (Å) | c/a |
|---|---|---|---|
| Example 1 | 2.816 (5) | 14.063 (3) | 4.995 |
| Comparative Example 1 | 2.817 (5) | 14.058 (6) | 4.990 |

A number inside a parenthesis in Table 1 denotes a standard deviation. In Table 1, a lattice constant of a c axis of the positive active material according to Example 1 is larger than that of the positive active material according to Comparative Example 1.

Evaluation Example 3: Pellet Density of Positive Active Material

Pellet density of the positive active materials according to Example, 1 and Comparative Example 1 were evaluated. The pellet density was measured and recorded within 3.0000 g (an error range ± 0.0004 g) of each positive active material.
The pellet density of the positive active materials is determined as follows: 3 grams of powder is filled into a KBr pellet die with a diameter "d" of 1.300 cm. A uniaxial load of 4.0 tons, corresponding to a pressure of 296 MPa, is applied for 30 seconds. After relaxing the load down to 7.4 MPa (100 kg uniaxial load), the thickness "t" of the pressed powder is measured. The pellet density is then calculated as follows:

$$3/(\pi \times (d/2)^2 \times t) \text{ in g/cm}^3.$$

The results of the positive active materials according to Examples 1 and 3 and Comparative Example 1 are shown in Table 2.

Evaluation Example 4: Mixture Density of Positive Electrode

Mixture density of the positive active materials according to Examples 1 to 3 and Comparative Example 1 was evaluated. The mixture density was measured by mixing 97 wt% of each positive active material, 1.5 wt% of ketjen black, and 1.5 wt% of a binder in an N-methyl pyrrolidone solvent to prepare positive active material slurry, coating the positive active material slurry on an Al foil (a substrate), drying it, and pressing it under each pressure to obtain mixture density under a general pressure and maximum mixture density reflecting a substrate stress. The results of the positive active materials according to Examples 1 and 3 and Comparative Example 1 are shown in Table 2.

(Table 2)

| Sample | Pellet density (g/cm³) | Mixture density (g/cm³) |
|---|---|---|
| Example 1 | 3.80 | 4.03 |

(continued)

| Sample | Pellet density (g/cm$^3$) | Mixture density (g/cm$^3$) |
|---|---|---|
| Example 3 | 3.84 | 4.10 |
| Comparative Example 1 | 3.77 | 3.98 |

Referring to Table 2, pellet density of the positive active materials according to Examples 1 and 3 and mixture density of positive electrodes respectively including the same were improved compared with that of the positive active material according to Comparative Example 1.

Evaluation Example 5: Thermal Stability of Positive Active Material

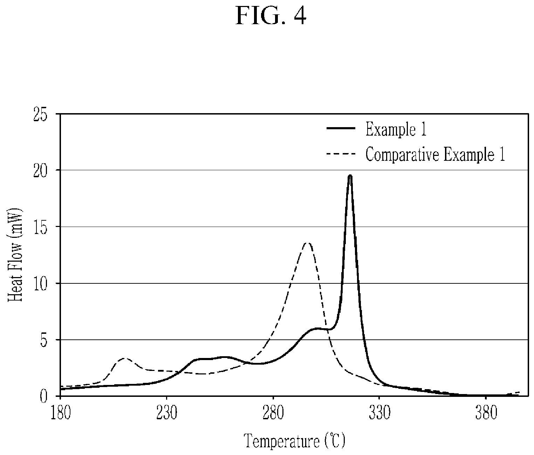

Thermal stability of the positive active materials according to Example 1 and Comparative Example 1 was evaluated. The half-cells according to Examples 4 to 6 and Comparative Example 2 respectively including the positive active materials according to Example 1 and Comparative Example 1 were charged at 0.1 C up to 4.5 V and then, disassembled to recover the positive active materials, and then, the thermal stability thereof was evaluated by using Differential Scanning Calorimetry (DSC). The DSC evaluation results of the positive active materials according to Example 1 and Comparative Example 1 are shown in Table 3 and FIG. 4. FIG. 4 is a graph showing the Differential Scanning Calorimetry (DSC) evaluation results of the positive active materials according to Example 1 and Comparative Example 1.

(Table 3)

|  | Onset (°C) | Max. temp. (°C) | Total J (J/g) |
|---|---|---|---|
| Example 1 | 220 | 316 | 2353 |
| Comparative Example 1 | 190 | 302 | 2575 |

Referring to Table 3 and FIG. 4, the positive active material according to Example 1 exhibited a higher onset temperature and also, a higher maximum exothermic temperature than the positive active material according to Comparative Example 1. Accordingly, the positive active material according to Example 1 exhibited excellent thermal stability compared with that of the positive active material according to Comparative Example 1.

Evaluation Example 6: Electrochemical Characteristics of Rechargeable Lithium Battery

The half-cells according to Examples 4 to 6 and Comparative Example 2 were once charged and discharged at 0.1 C, and then, initial charge and discharge efficiency thereof was evaluated. The half-cells were once charged and discharged at 0.1 C and then, charged at 0.1 C with a cut-off at 4.5 V and then, charged under a constant voltage condition with a cut-off at 0.05 C, and discharged at 1.0 C with a cut-off at 3.0 V to measure 1 C discharge capacity. 1 C discharge capacity/0.1 C discharge capacity were used to evaluate rate capability. The half-cells were charged under a constant current condition at 1.0 C (1.0 C=160 mAh/g) with a cut-off at 4.5 V and then, charged under a constant voltage condition with a cut-off at 0.05 C and then, discharged at 1.0 with a cut-off at 3.0 V at room temperature (25 °C), and this charge and discharge was 50 times repeated to evaluate a cycle-life retention. The results are shown in Table 4.

(Table 4)

|  | Initial capacity (0.1 C, mAh/g) | Initial efficiency (0.1C, %) | Rate capability (1 C/ 0.1 C) | Cycle-life retention (50 cycles) |
|---|---|---|---|---|
| Example 4 | 199.62 | 97.02 | 92.66 % | 91.95 % |
| Example 5 | 198.52 | 96.83 | 93.14 % | 92.66 % |
| Example 6 | 199.98 | 97.23 | 93.47 % | 92.87 % |
| Comparative Example 2 | 197.75 | 96.50 | 91.80 % | 90.30 % |

Referring to Table 4, the rechargeable lithium battery cells according to Examples 4 to 6 exhibited excellent performance in terms of rate capability and cycle-life retention as well as initial capacity and initial efficiency compared with those of the rechargeable lithium battery cell according to Comparative Example 2.

**Claims**

1. A positive active material (1) for a rechargeable lithium battery (100), comprising
   a lithium cobalt oxide comprising or consisting of
   secondary particles (10) having an average particle diameter of 15 $\mu$m to 25 $\mu$m,
   wherein the secondary particles (10) comprise a plurality of primary particles (20) having an average particle diameter of 2 $\mu$m to 10 $\mu$m, and
   the positive active material (1) has pellet density of greater than or equal to 3.80 g/cm$^3$.

2. The positive active material of claim 1, wherein the positive active material has pellet density of 3.80 g/cm$^3$ to 3.85 g/cm$^3$.

3. The positive active material of claim 1, wherein the secondary particle has an internal porosity of less than or equal to 10 %.

4. The positive active material of claim 1, wherein internal pores of the secondary particle have a size of less than or equal to 5 nm.

5. The positive active material of claim 1, wherein the primary particle and the secondary particle have an average particle diameter ratio of 1:3 to 1:12.

6. The positive active material of claim 1, wherein greater than or equal to 8 cross sections of the primary particle are present on the cross section of the secondary particle which is cut to include the longest diameter.

7. The positive active material of claim 1, wherein a lattice constant c on a c axis of the lithium cobalt oxide satisfies the following range:

$$14.060 \text{ Å} \leq c \leq 14.069 \text{ Å}.$$

8. The positive active material of claim 1, wherein the lithium cobalt oxide comprises at least one metal selected from Mn, Zn, Ti, and Co.

9. The positive active material of claim 1, wherein the positive active material further comprises a second lithium cobalt oxide having an average particle diameter in a range of 2 $\mu$m to 10 $\mu$m.

10. The positive active material of claim 9, wherein the first lithium cobalt oxide and the second lithium cobalt oxide are used in a weight ratio of 6:4 to 9:1.

11. The positive active material of claim 9, wherein at least either one of the first lithium cobalt oxide and the second lithium cobalt oxide comprises at least one metal selected from Mn, Zn, Ti, and Co.

12. A method of manufacturing a positive active material (1) for a rechargeable lithium battery (100), wherein the positive active material (1) comprises lithium cobalt oxide and the method includes the steps of:

    heat-treating a cobalt-containing compound at a temperature of greater than or equal to 900 °C to form cobalt oxide comprising $Co_3O_4$ and CoO,
    adding a lithium compound, and
    reacting the cobalt oxide with the lithium compound to prepare the lithium cobalt oxide.

13. The method of claim 12, wherein the lithium compound is added so that a mole ratio of lithium relative to cobalt is 0.8 to 1.0.

14. A positive electrode (114) for a rechargeable lithium battery (100), comprising

a current collector; and
a positive active material layer on the current collector,
wherein the positive active material layer comprises the positive active material of any one of claim 1 to claim 11 or the positive active material obtained by method of claim 12 or claim 13.

15. A rechargeable lithium battery (100) comprising
the positive electrode (114) according to claim 14;
a negative electrode (112); and
an electrolyte.

FIG. 1

FIG. 2

# FIG. 3

# FIG. 4

**EP 3 617 153 A1**

Europäisches Patentamt
European Patent Office
Office européen des brevets

# EUROPEAN SEARCH REPORT

Application Number

EP 19 19 3019

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/221945 A1 (KIM YOUNG-KI [KR] ET AL) 6 August 2015 (2015-08-06) * page 2, paragraph [0045]; examples 3,4; tables 1,3 * | 1-15 | INV. C01G51/00 |
| X | US 2010/176352 A1 (CHEN ZHAOHUI [CA] ET AL) 15 July 2010 (2010-07-15) * page 1, paragraph [0013] * * page 2, paragraph [0028] * * page 3, paragraph [0032] * * examples 1-3; table 1 * | 1-15 | |
| A | US 2005/271576 A1 (AWANO HIDEKAZU [JP] ET AL) 8 December 2005 (2005-12-08) * examples 1-4 * | 1-15 | |

TECHNICAL FIELDS
SEARCHED        (IPC)

C01G

The present search report has been drawn up for all claims

| Place of search | Date of completion of the search | Examiner |
|---|---|---|
| Munich | 22 January 2020 | Timmermans, Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

# EP 3 617 153 A1

## ANNEX TO THE EUROPEAN SEARCH REPORT
## ON EUROPEAN PATENT APPLICATION NO.

EP 19 19 3019

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2020

| Patent document cited in search report | Publication date | Patent family member(s) | Publication date |
|---|---|---|---|
| US 2015221945 A1 | 06-08-2015 | KR 20150093056 A<br>US 2015221945 A1 | 17-08-2015<br>06-08-2015 |
| US 2010176352 A1 | 15-07-2010 | BR PI0813395 A2<br>CA 2691798 A1<br>CN 101687666 A<br>EP 2162396 A1<br>EP 3366648 A1<br>EP 3511298 A1<br>JP 5349469 B2<br>JP 2010532075 A<br>KR 20100032369 A<br>TW 200921972 A<br>US 2010176352 A1<br>US 2013071661 A1<br>US 2013071747 A1<br>WO 2009003573 A1 | 30-12-2014<br>08-01-2009<br>31-03-2010<br>17-03-2010<br>29-08-2018<br>17-07-2019<br>20-11-2013<br>30-09-2010<br>25-03-2010<br>16-05-2009<br>15-07-2010<br>21-03-2013<br>21-03-2013<br>08-01-2009 |
| US 2005271576 A1 | 08-12-2005 | US 2005271576 A1<br>US 2008087862 A1 | 08-12-2005<br>17-04-2008 |

EPO FORM P0459

For more details about this annex : see Official Journal of the European Patent Office, No. 12/82